# EUROPEAN PATENT SPECIFICATION

(11) **EP 4 167 544 B1**
(45) Date of publication and mention of the grant of the patent: **26.03.2025**
(21) Application number: 21837267.0
(22) Date of filing: 02.06.2021
(51) Int. Cl.: H04L 47/125, H04L 45/24

(54) **LOAD BALANCING METHOD, APPARATUS AND SYSTEM**
LASTAUSGLEICHSVERFAHREN, -VORRICHTUNG, UND -SYSTEM
PROCÉDÉ D'ÉQUILIBRAGE DE CHARGE, APPAREIL ET SYSTÈME

(30) Priority: 06.07.2020 CN 202010641935; 31.07.2020 CN 202010763290
(43) Date of publication of application: 19.04.2023
(73) Proprietor: Huawei Technologies Co., Ltd., Longgang District, Shenzhen, Guangdong 518129 (CN)
(72) Inventor: HU, Ruizhao, Shenzhen, Guangdong 518129 (CN); PENG, Shuping, Shenzhen, Guangdong 518129 (CN); LI, Zhenbin, Shenzhen, Guangdong 518129 (CN)
(74) Representative: Pfenning, Meinig & Partner mbB
(86) International application number: PCT/CN2021/097814
(87) International publication number: WO 2022/007550

(56) References cited:
- EP-A1- 2 224 649
- EP-A1- 3 410 653
- CN-A- 101 325 557
- CN-A- 106 130 920
- CN-A- 110 995 609
- US-A1- 2014 379 938
- US-A1- 2016 028 855

## Description

### TECHNICAL FIELD

This application relates to the field of communication technologies, and in particular, to a load balancing method and apparatus, a computer readable storage medium, a chip and a system.

### BACKGROUND

Per-flow load balancing (load balance), also referred to as per-flow load sharing, means that a network device distributes a plurality of data flows to a plurality of links for forwarding, and a same data flow is transmitted over a same link, to reduce load of any link of the plurality of links and improve network reliability.

In existing technologies, the network device performs per-flow load balancing based on 5-tuple information of data flows, and data flows having different 5-tuple information are transmitted over different links. The 5-tuple information includes a source address, a destination address, a source port number, a destination port number, and a protocol number of a transmission protocol of a data flow.

However, performing per-flow load balancing based on the coarse-grained 5-tuple information results in low network resource utilization.

EP3410653 A1 discloses an advertising of selected fabric paths for service routes in virtual nodes. US 2016/028855 A1 proposes a device intermediary to a plurality of clients and a plurality of services executed on a plurality of servers.
Techniques for establishing an overall label switched path (LSP) for load balancing network traffic being sent across a network using the a resource reservation protocol such as Resource Reservation Protocol with Traffic Engineering (RSVP-TE) are described in EP 2224649 A1.

### SUMMARY

The present invention is defined by the independent claims. Particular improvements are set forth in the dependent claims. Embodiments of this application further provide a load balancing method and apparatus, a network device, and a system, to improve network resource utilization by performing per-flow load balancing on a per application basis.

According to a first aspect, a load balancing method is provided, and applied to a first network device. The method specifically includes the following steps. The first network device obtains a first Internet Protocol version 6 (Internet Protocol version 6, IPv6) packet, where the first IPv6 packet includes first load balancing information, and the first load balancing information indicates the first network device to send the first IPv6 packet in a load balancing manner. The first load balancing information includes first application characteristic information, and the first application characteristic information describes a characteristic of a first application associated with the first IPv6 packet. The first network device determines a first link based on a hash algorithm and the first load balancing information, where the first link is one of a plurality of links for communication between the first network device and a second network device. The second network device is a network device on a forwarding path of the first IPv6 packet, for example, a destination node, a tail node, or a next-hop network device of the first network device. The plurality of links may be physical links or logical links. Finally, the first network device sends the first IPv6 packet to the second network device over the first link. Because the first IPv6 packet carries the first load balancing information including the first application characteristic information, the first network device performs hashing on the first load balancing information to determine one of the plurality of links, to implement application-based load balancing. Compared with the conventional load balancing mode on a 5-tuple basis, load balancing is performed at a finer granularity of an application, and therefore the network resource utilization is higher.

The first network device and the second network device are configured to transmit data flows between terminal devices and a server, to implement load balancing.

The first application characteristic information includes application identifier information of the first application, and the application identifier information of the first application identifies the first application. "Identifying" the first application means that the first application is uniquely identified, or that a type of application to which the first application belongs is uniquely identified. Optionally, the first application characteristic information further includes at least one of the following information: performance requirement information of the first application, flow identifier information of a data flow to which the first IPv6 packet belongs, and user identifier information of the first application. The performance requirement information of the first application reflects requirements of the first application for network performance, for example, one or more of the following requirements: bandwidth (bandwidth), latency (latency), jitter (jitter), packet loss (packet loss), reliability (reliability), and security (security). The flow identifier information of the data flow to which the first IPv6 packet belongs uniquely identifies the data flow to which the first IPv6 packet belongs, for example, a flow identifier (flow Identifier, flow ID) or a session (session) identifier carried in the first IPv6 packet. The user identifier information of the first application identifies a user corresponding to the first application. For example, the user identifier information may be information such as a user name (user name) used by the user to log in to the first application, or an email address or a mobile phone number bound to the first application.

The first IPv6 packet includes a segment routing header SRH. That the first network device sends the first IPv6 packet to the second network device over the first link includes: The first network device encapsulates an IPv6 basic header at an outer layer of the SRH of the first IPv6 packet to obtain a second IPv6 packet, where the IPv6 basic header carries second application characteristic information, and the second application characteristic information is information obtained by hashing the first load balancing information based on the hash algorithm. The first network device sends the second IPv6 packet to the second network device over the first link, so that the second network device or another network device can perform load sharing based on the second application characteristic information in the second IPv6 packet.

In a possible design, the method further includes: The first network device obtains a third IPv6 packet, where the third IPv6 packet includes third load balancing information, the third load balancing information indicates the first network device to send the third IPv6 packet in a load balancing manner, the third load balancing information includes third application characteristic information, and the third application characteristic information describes a characteristic of a second application associated with the third IPv6 packet. The first network device determines a second link based on the hash algorithm and the third load balancing information, where the plurality of links include the second link. The first network device sends the third IPv6 packet to the second network device over the second link. In other words, the first network device may send, over different links, IPv6 packets that carry application characteristic information corresponding to different applications, to implement load sharing.

According to a second aspect, a load balancing apparatus is provided. The apparatus includes: a first obtaining unit, configured to obtain a first Internet Protocol version 6 IPv6 packet, where the first IPv6 packet includes first load balancing information, the first load balancing information indicates a first network device to send the first IPv6 packet in a load balancing manner, the first load balancing information includes first application characteristic information, and the first application characteristic information describes a characteristic of a first application associated with the first IPv6 packet; a first determining unit, configured to determine a first link based on a hash algorithm and the first load balancing information, where the first network device communicates with a second network device over a plurality of links, and the plurality of links include the first link; and a first sending unit, configured to send the first IPv6 packet to the second network device over the first link.

The first application characteristic information includes application identifier information of the first application, and the application identifier information of the first application identifies the first application. The load balancing apparatus and the second network device are configured to transmit data flows between terminal devices and a server, to implement load balancing.

The first IPv6 packet includes a segment routing header SRH.

The first sending unit is configured to encapsulate an IPv6 basic header at an outer layer of the SRH of the first IPv6 packet to obtain a second IPv6 packet, and send the second IPv6 packet to the second network device over the first link. The IPv6 basic header carries second application characteristic information, and the second application characteristic information is information obtained by hashing the first load balancing information based on the hash algorithm.

In a possible design, the apparatus further includes: a second obtaining unit, configured to obtain a third IPv6 packet, where the third IPv6 packet includes third load balancing information, the third load balancing information indicates the first network device to send the third IPv6 packet in a load balancing manner, the third load balancing information includes third application characteristic information, and the third application characteristic information describes a characteristic of a second application associated with the third IPv6 packet; a second determining unit, configured to determine a second link based on the hash algorithm and the third load balancing information, where the plurality of links include the second link; and a second sending unit, configured to send the third IPv6 packet to the second network device over the second link.

According to a third aspect, a first network device is provided. The first network device has a function of implementing behavior of the first network device in the foregoing method. The function may be implemented based on hardware, or may be implemented based on hardware executing corresponding software. The hardware or the software includes one or more modules corresponding to the foregoing functions.

In a possible design, a structure of the first network device includes a processor and an interface. The processor is configured to support the first network device to perform a corresponding function in the foregoing method. The interface is configured to: support communication between the first network device and the second network device; and send information or instructions in the foregoing methods to the second network device, or receive information or instructions in the foregoing methods from the second network device. The first network device may further include a memory. The memory is configured to be coupled to the processor, and store program instructions and data that are required for the first network device.

In another possible design, the first network device includes a processor, a transmitter, a receiver, a random access memory, a read-only memory, and a bus. The processor is coupled to the transmitter, the receiver, the random access memory, and the read-only memory through the bus. When the first network device needs to be run, a basic input/output system built into the read-only memory or bootloader in an embedded system in the read-only memory is used to boot a system to start, to boot the first network device to enter a normal running state. After entering the normal running state, the first network device runs an application program and an operating system in the random access memory, so that the processor performs the method in any one of the first aspect or the possible implementations of the first aspect.

According to a fourth aspect, a first network device is provided. The first network device includes a main control board and an interface board, and may further include a switching board. The first network device is configured to perform the method in any one of the first aspect or the possible implementations of the first aspect. Specifically, the first network device includes modules configured to perform the method in any one of the first aspect or the possible implementations of the first aspect.

According to a fifth aspect, a first network device is provided. The first network device includes a controller and a first forwarding subdevice. The first forwarding subdevice includes an interface board, and may further include a switching board. The first forwarding subdevice is configured to perform a function of the interface board in the fourth aspect, and may further perform a function of the switching board in the fourth aspect. The controller includes a receiver, a processor, a transmitter, a random access memory, a read-only memory, and a bus. The processor is coupled to the receiver, the transmitter, the random access memory, and the read-only memory through the bus. When the controller needs to be run, a basic input/output system built into the read-only memory or bootloader in an embedded system in the read-only memory is used to boot a system to start, to boot the controller to enter a normal running state. After the controller enters the normal running state, an application program and an operating system are run in the random access memory, to enable the processor to execute a function of the main control board in the fourth aspect.

According to a sixth aspect, a load balancing system is provided. The system includes a first network device and a second network device. The first network device is configured to perform the load balancing method according to the first aspect, and the second network device is configured to receive the first IPv6 packet.

According to a seventh aspect, a computer-readable storage medium is provided, including instructions, a program, or code. When the instructions, the program, or the code are/is executed on a computer, the computer is enabled to perform the load balancing method according to the first aspect.

According to an eighth aspect, a chip is provided, including a memory and a processor. The memory is configured to store instructions or program code, and the processor is configured to invoke the instructions or the program code from the memory and run the instructions or the program code, to perform the load balancing method according to the first aspect.

### BRIEF DESCRIPTION OF DRAWINGS

FIG. 1 is a schematic diagram of a structure of a load balancing system according to an embodiment of this application;
FIG. 2 is a schematic flowchart of a load balancing method according to an embodiment of this application;
FIG. 3 is a schematic diagram of a format of an IPv6 packet according to an embodiment of this application;
FIG. 4 is a schematic diagram of a format of an SRH of an SRv6 packet according to an embodiment of this application;
FIG. 5 is a schematic diagram of a possible format of a first IPv6 packet according to an embodiment of this application;
FIG. 6 is a schematic diagram of another possible format of a first IPv6 packet according to an embodiment of this application;
FIG. 7 is a schematic diagram of a network architecture of a data center network according to an embodiment of this application;
FIG. 8 is a schematic diagram of a structure of a load balancing apparatus 800 according to an embodiment of this application;
FIG. 9 is a schematic diagram of a structure of a device 900 according to an embodiment of this application;
FIG. 10 is a schematic diagram of a structure of a device 1000 according to an embodiment of this application; and
FIG. 11 is a schematic diagram of a structure of a load balancing system 1100 according to an embodiment of this application.

### DESCRIPTION OF EMBODIMENTS

In conventional technologies, performing per-flow load balancing based on coarse-grained 5-tuple information of a data flow results in low network resource utilization. In addition, when a port number included in the 5-tuple information is obtained, because the port number is information about a layer 4 network, a network device needs to move a packet window across the extension header to obtain the port number in the case of a long extension header. This affects packet forwarding efficiency.

Embodiments of this application provide a load balancing method and apparatus, and a device. Different applications or different types of applications are transmitted over different links by implementing per-flow load balancing at a finer granularity than 5-tuple information, that is, on a per application (application, APP) basis, thereby improving network resource utilization.

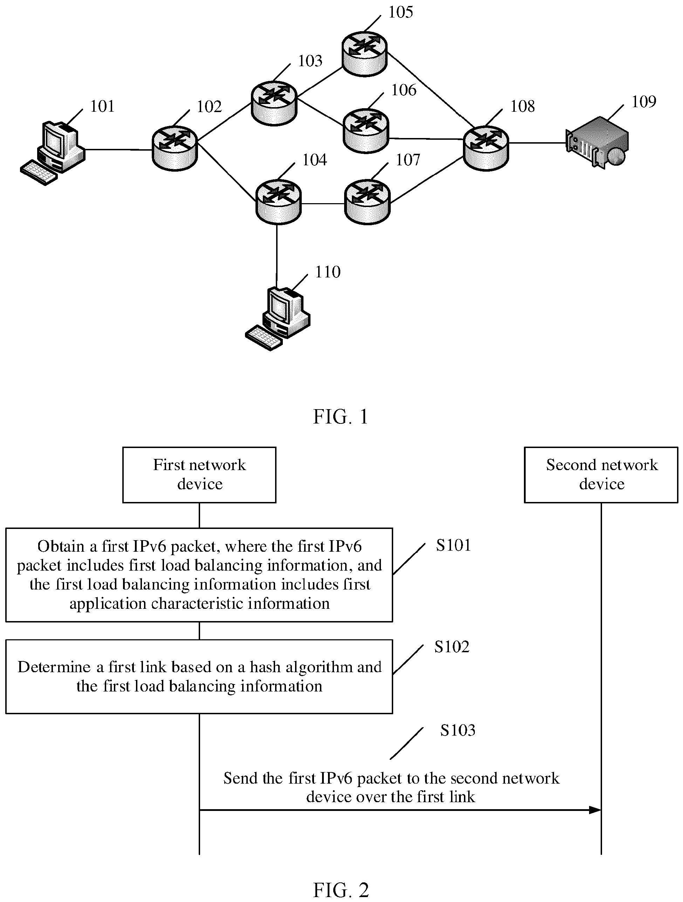

Before the load balancing method provided in embodiments of this application is described, an example hardware scenario to which the method is applicable is first described with reference to FIG. 1. FIG. 1 is a schematic diagram of a structure of a load balancing system according to an embodiment of this application.

In FIG. 1, the load balancing system includes a terminal device 101, a network device 102, a network device 103, a network device 104, a network device 105, a network device 106, a network device 107, a network device 108, a server 109, and a terminal device 110. The terminal device 101 is connected to the network device 102. The network device 102 is connected to both the network device 103 and the network device 104. The network device 103 is connected to both the network device 105 and the network device 106. Both the network device 105 and the network device 106 are connected to the network device 108. The network device 104 is connected to the network device 107. The network device 107 is connected to the network device 108. The network device 108 is connected to the server 109. The terminal device 110 is connected to the network device 104.

The terminal device 101 and the terminal device 110 may be, for example, mobile phones or personal computers (personal computer, PC), for example, tablet personal computers (tablet personal computer, Tablet PC), notebook computers, ultra-mobile personal computers, or personal digital assistants. Applications (application, APP) are installed on the terminal device 101 and the terminal device 110. The application, also referred to as an application program (application program, APP program) or application software (application software, APP software), is a computer program accomplishing one or more specific tasks that usually needs to interact with a user. In embodiments of this application, the application may be, for example, a game APP, a video APP, an email APP, an instant messaging APP, a traffic information APP, or a weather forecast APP.

The network device 102, the network device 103, the network device 104, the network device 105, the network device 106, the network device 107, and the network device 108 may be forwarding devices such as routers (router) and switches (switch), and are configured to transmit a data flow between the terminal device 101 and the server 109 and a data flow between the terminal device 110 and the server 109, to implement load balancing.

The load balancing method provided in embodiments of this application is described below with reference to FIG. 1 and FIG. 2. FIG. 2 is a schematic flowchart of a load balancing method according to an embodiment of this application.

The load balancing method provided in this embodiment of this application includes the following steps.

S101: A first network device obtains a first IPv6 packet, where the first IPv6 packet includes first load balancing information, and the first load balancing information includes first application characteristic information.

In this embodiment of this application, the first network device may be, for example, any one of the network device 102, the network device 103, the network device 104, the network device 105, the network device 106, and the network device 107 in FIG. 1.

In this embodiment of this application, the first network device obtains the first IPv6 packet, where the first IPv6 packet includes the first load balancing information, and the first load balancing information indicates the first network device to send the first IPv6 packet in a load balancing manner. The first load balancing information includes at least first application characteristic information, and the first application characteristic information describes a characteristic of a first application associated with the first IPv6 packet. Optionally, the first load balancing information may further include at least one of a source address and a destination address of the first IPv6 packet. In an IPv6 scenario, both the source address and the destination address are IP addresses.

For example, an application A is installed on the terminal device 101. The application A triggers generation of an IPv6 packet M1, and a destination address of the IPv6 packet M1 is the server 109. When the first network device is the network device 102, the first network device receives the IPv6 packet M1 from the terminal device 101. The IPv6 packet M1 includes load balancing information S1, the load balancing information S1 includes at least application characteristic information P1, and the application characteristic information P1 describes the application A. Optionally, the load balancing information S1 may further include at least one of an IP address of the terminal device 101 or an IP address of the server 109.

In another example, an application B is installed on the terminal device 101. The application B triggers generation of an IPv6 packet M2, and a destination address of the IPv6 packet M1 is the server 109. When the first network device is the network device 102, the first network device receives the IPv6 packet M2 from the terminal device 101. The IPv6 packet M2 includes load balancing information S2, the load balancing information S2 includes application characteristic information P2, and the application characteristic information P2 describes the application B. Optionally, the load balancing information S2 may further include at least one of an IP address of the terminal device 101 or an IP address of the server 109.

In still another example, an application C is installed on the terminal device 110. The application C triggers generation of an IPv6 packet M3, and a destination address of the IPv6 packet M3 is the server 109. When the first network device is the network device 104, the first network device receives the IPv6 packet M3 from the terminal device 110. The IPv6 packet M3 includes load balancing information S3, the load balancing information S3 includes application characteristic information P3, and the application characteristic information P3 describes the application C. Optionally, the load balancing information S3 may further include at least one of an IP address of the terminal device 110 or an IP address of the server 109.

In this embodiment of this application, the first application characteristic information may be implemented in a plurality of manners. In a first possible implementation, which concerns a comparative example, the first application characteristic information includes application identifier information of the first application, and the application identifier information of the first application identifies the first application. In this embodiment of this application, "identifying" the first application means that the first application is uniquely identified, or that a type of application to which the first application belongs is uniquely identified.

In addition to the application identifier information of the first application, the first application characteristic information may further include one or more of the following information: performance requirement information of the first application, flow identifier information of a data flow to which the first IPv6 packet belongs, and user identifier information of the first application. The performance requirement information of the first application may be a service level agreement (service level agreement, SLA) level (level), which reflects a requirement of the first application for network performance. The performance requirement information is, for example, one or more of the following information, such as bandwidth (bandwidth), latency (latency), jitter (jitter), packet loss (packet loss), reliability (reliability), and security (security). The flow identifier information of the data flow to which the first IPv6 packet belongs uniquely identifies the data flow to which the first IPv6 packet belongs, for example, a flow identifier (flow Identifier, flow ID) or a session (session) identifier carried in the first IPv6 packet. The user identifier information of the first application identifies a user corresponding to the first application. For example, the user identifier information may be information such as a user name (user name) used by the user to log in to the first application, or an email address or a mobile phone number bound to the first application.

In some examples, the first application characteristic information may be expressed as a value, which may be referred to as an application-aware identifier (Application-aware ID) or an application-aware IPv6 networking (Application-aware IPv6 Networking, APN6) APN ID in this embodiment of this application. For example, if a flow ID is 0x01, a user ID is 0x02, an APP ID is 0x03, and an SLA level is 0x04, an application-aware ID may be 0x04030201.

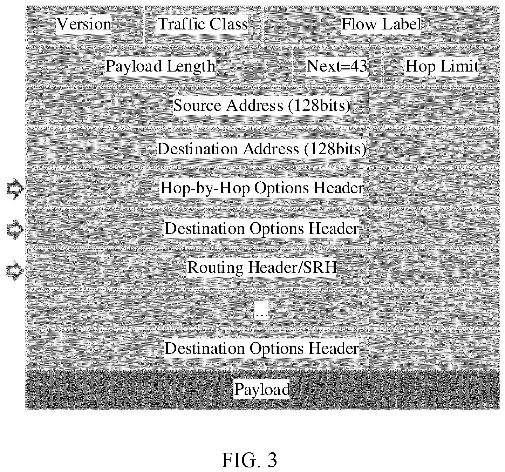

The following describes a location at which the first application characteristic information may be carried in the first IPv6 packet in the case of implementing the first application characteristic information in the first possible implementation, which concerns a comparative example. Before detailed description, a format of an IPv6 packet is described with reference to FIG. 3. Refer to FIG. 3. The IPv6 packet includes a basic header, extension headers (extension header, EH), and a payload (payload). The basic header includes a version (version) field, a traffic class (traffic class) field, a flow label (flow label) field, a payload length (payload length) field, a next header (next header) field (for example, with a value of 43), a hop limit (a hop limit) field, a source address (source address) field, and a destination address (destination address) field. The extension headers include a hop-by-hop options header (hop-by-hop options header, HBH), a destination options header (destination options header, DOH), a routing header (routing header) (which may be a segment routing header (segment routing header, SRH) in the case of an SRv6 packet), and the like.

In this embodiment of this application, the first application characteristic information may be carried in the basic header of the IPv6 packet, or may be carried in the extension header such as the HBH, the DOH, or the SRH.

If the first application characteristic information is carried in the basic header of the IPv6 packet, the first application characteristic information may be specifically carried in the flow label (flow label) field of the basic header.

If the first application characteristic information is carried in the HBH, DOH, or SRH of the IPv6 packet, the first application characteristic information may be specifically carried in a type-length-value (type-length-value, TLV) field of the extension headers. When the IPv6 packet is specifically an SRv6 packet, the first application characteristic information may be carried in a TLV field of the SRv6 packet or another field.

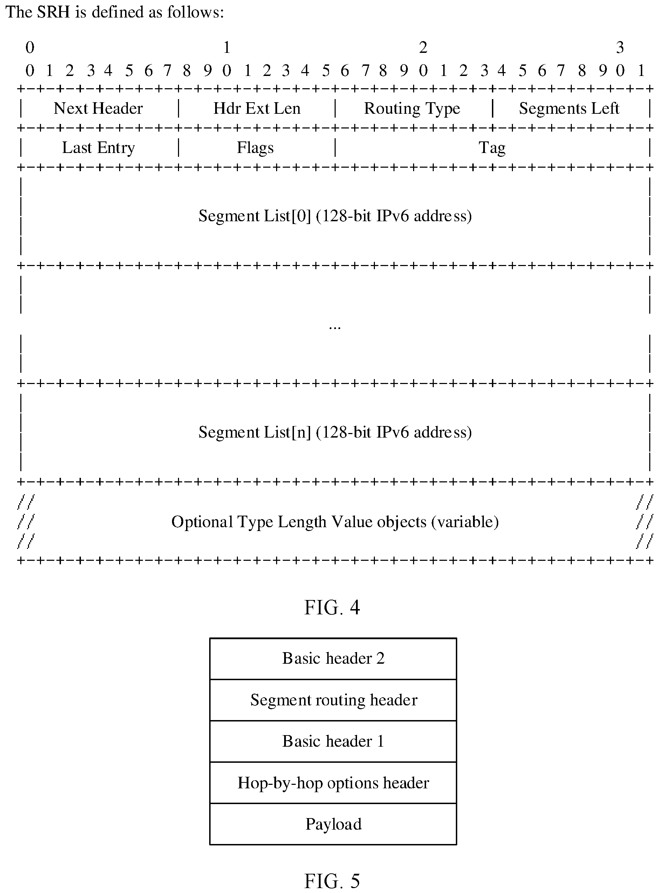

FIG. 4 is a schematic diagram of a format of an SRH of an SRv6 packet. In the figure, the SRH includes a next header field, an SRH length (Hdr Ext Len) field, a routing type (routing type), a segment left (segment left) field, a last entry (last entry) field, a flags (flags) field, a tag (tag) field, a segment list (segment list) (which is a 128-bit IPv6 address), and an optional TLV objects field.

The first application characteristic information may be carried in an optional TLV field in FIG. 4, a tag field, or a segment identifier (segment identifier, SID) field in a segment list. The SID field includes a locator (locator) field, a function (function) field, and an argument (argument) field. The argument field is used to store the first application characteristic information.

When the first application characteristic information is carried in the TLV field, type T in the TLV field defines a type of the TLV. In this embodiment of this application, the type of the TLV is a TLV that carries the first application characteristic information. Length L in the TLV field indicates a length of a value V in the TLV. The value V in the TLV field is the first application characteristic information. The length of the TLV value may be 128 bits. A format of the TLV value may be, for example, a SID format in an SRH.

The foregoing describes the first application characteristic information implemented in the first possible implementation, which concerns a comparative example. In a second possible implementation, which is according to the invention, second application characteristic information is information obtained by hashing (hash) first load balancing information. The first load balancing information includes at least first application characteristic information, and the first application characteristic information includes at least application identifier information of the first application. Optionally, the second application characteristic information may further include one or more of the following information: performance requirement information of the first application, flow identifier information of a data flow to which the first IPv6 packet belongs, and user identifier information of the first application. For an expression manner of the second application characteristic information, refer to the expression manner of the first application characteristic information. Details are not described herein again.

The first application characteristic information is implemented in the second possible implementation, and the first IPv6 packet is a segment routing over IPv6 (Segment Routing over IPv6, SRv6) packet, hence the first IPv6 packet has two basic headers. The first application characteristic information may be carried in a basic header at an outermost layer of the first IPv6 packet, and is specifically encapsulated in a flow label field of the basic header at the outermost layer. In addition to the flow label field, the basic header at the outermost layer may further include a source address field and a destination address field. The source address field carries the source address of the first IPv6 packet, and the destination address field carries the destination address of the first IPv6 packet. The destination address is an SID corresponding to a segment left in a segment identifier list (SID list) in the first IPv6 packet. In this embodiment of this application, in addition to the second application characteristic information, optionally, the second load balancing information may further include at least one of the source address and the destination address of the first IPv6 packet.

In this embodiment of this application, the second IPv6 packet carries the second application characteristic information.

For example, FIG. 5 is a schematic diagram of a possible format of the first IPv6 packet. In the figure, the first IPv6 packet includes a basic header 1, an HBH, and a payload. An SRH is encapsulated at an outer layer of the basic header 1, and a basic header 2 is encapsulated at an outer layer of the SRH. The basic header 2 carries the second application characteristic information, and the HBH or the basic header 1 may carry the second application characteristic information.

If the first application characteristic information is implemented in the second possible implementation, and the first IPv6 packet is a segment routing (segment routing, SR) multiprotocol label switching (multi protocol label switching, MPLS) packet or an MPLS packet, the first application characteristic information may be carried in a label stack encapsulated at an outermost layer of the first IPv6 packet. Specifically, the label stack may include an entropy label indicator (entropy label indicator, ELI) and an entropy label (entropy label, EL). The ELI indicates a location of the EL in the label stack, and the EL includes the first application characteristic information. The first network device may obtain the first application characteristic information from the EL based on the location indicated by the ELI.

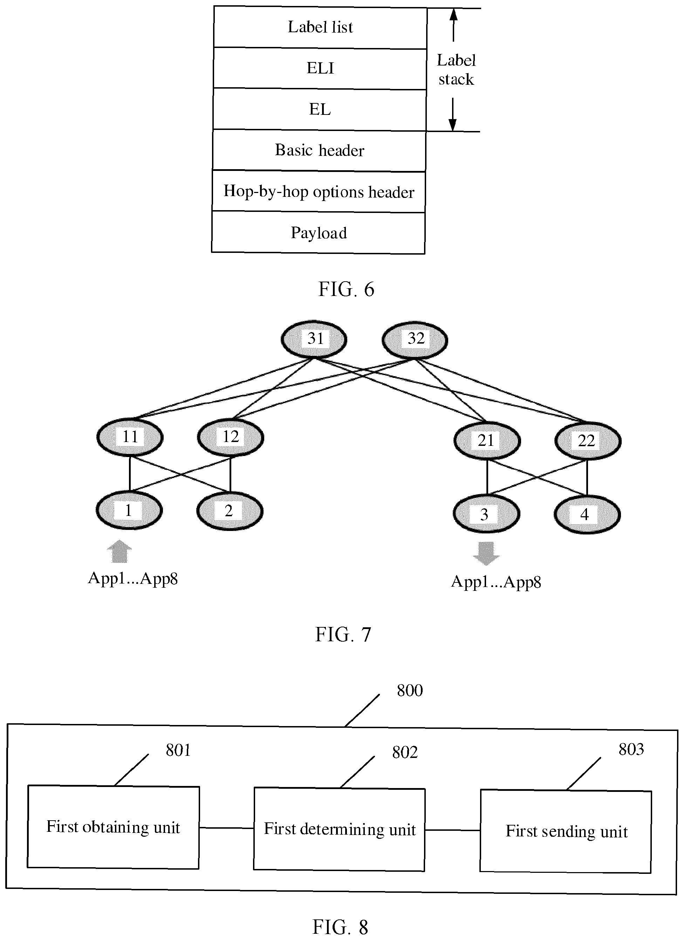

For example, FIG. 6 is a schematic diagram of another possible format of the first IPv6 packet. In the figure, the first IPv6 packet includes a basic header, an HBH, a payload, and a label stack. The label stack includes a label list, an ELI, and an EL. The label list includes a label corresponding to a forwarding path of the first IPv6 packet. The EL carries the first application characteristic information. The HBH or the basic header carries the second application characteristic information.

Certainly, the foregoing two possible implementations do not constitute any limitation on the first application characteristic information, and persons skilled in the art may design the technical solutions depending on specific situation.

After obtaining the first IPv6 packet, the first network device may continue to perform S102.

S102: The first network device determines a first link based on a hash algorithm and the first load balancing information.

In the embodiments of the invention, the first network device performs hashing on the first load balancing information, to obtain a hash value of the first load balancing information. The hash algorithm is also referred to a hash algorithm. For instance, the first load balancing information may be converted into a value of a specific length by using the hash algorithm. The value is a hash value.

After obtaining the hash value of the first load balancing information, the first network device may determine the first link based on the obtained hash value. The first link is one of a plurality of links for communication between the first network device and a second network device. The second network device is a network device on the forwarding path of the first IPv6 packet, for example, a destination node, a tail node, or a next-hop network device of the first network device. For example, when the first network device is the network device 102 in FIG. 1, the second network device may be the network device 103, the network device 104, the network device 108, or the like.

In this embodiment of this application, load balancing is performed between the first network device and the second network device. The first network device and the second network device may be directly or indirectly connected, and the plurality of links between the first network device and the second network device may be physical links or logical links. For example, in a virtual private network (virtual private network, VPN) scenario, the first network device may be a head node, and the second network device may be a tail node. A plurality of tunnels may be established between the first network device and the second network device, and the plurality of tunnels are the plurality of links. In another example, in an SR scenario, the plurality of links between the first network device and the second network device may be expressed as a plurality of segment identifier (segment identifier, SID) lists (list), and each SID list represents one forwarding path. Different SID lists may satisfy a same network performance requirement, such as latency or jitter. In another example, the first network device and the second network device may be connected through a plurality of physical ports. The plurality of physical ports belong to a same link layer protocol, and are bundled together as a link trunking (trunk) interface. A link corresponding to the interface is a logical link, and a link corresponding to each physical interface belongs to a member link of the logical link.

In addition, in an SR MPLS or SRv6 scenario, there may be one or more second network devices. A plurality of links between the first network device and the plurality of second network devices may have a same adjacency label. For example, in the architectural diagram shown in FIG. 1, it is assumed that there are two links between the network device 102 and the network device 103 and one link between the network device 102 and the network device 104, and adjacency labels of the three links are all 1001. In this case, if the IPv6 packet M1 includes the adjacency label 1001, the network device 102 determines that the IPv6 packet M1 can be forwarded over the three links, and may determine one of the three links as the first link.

There may be two specific implementations of a method for determining the first link by the first network device based on the hash value of the first load balancing information.

In a first implementation, the first network device determines the first link based on an obtained remainder obtained by dividing the hash value by a quantity of the plurality of links.

For example, in FIG. 1, there are three forwarding paths (considered as three links) between the network device 102 and the network device 108: a forwarding path 1, a forwarding path 2, and a forwarding path 3. An IPv6 packet M1 generated by the terminal device 101 and destined for the server 109 can be forwarded over all the forwarding paths. The forwarding path 1 is as follows: the network device 102-the network device 103-the network device 105-the network device 108. The forwarding path 2 is as follows: the network device 102-the network device 103-the network device 106-the network device 108. The forwarding path 3 is as follows: the network device 102-the network device 104-the network device 107-the network device 108. It is assumed that a hash value of the load balancing information S1 included in the IPv6 packet M1 is 100. Because a remainder obtained by dividing 100 by 3 is 1, the network device 102 may use the second link, that is, the forwarding path 2, as the first link. It is assumed that a hash value of the load balancing information S1 included in the IPv6 packet M1 is 101. Because a remainder obtained by dividing 101 by 3 is 2, the network device 102 may use the third link, that is, the forwarding path 3, as the first link.

In this implementation, the first network device may pre-generate a correspondence between the destination address of the first IPv6 packet and a possible remainder, and a value of the remainder are considered as a quantity of links. After obtaining the first IPv6 packet, the first network device obtains the value of the remainder based on the destination address of the first IPv6 packet and the correspondence, and uses the value as the quantity of the plurality of links for calculation.

Optionally, the correspondence may be embodied in a forwarding entry. For example, in the forwarding path 1, the forwarding path 2, and the forwarding path 3, outbound interfaces corresponding to the forwarding path 1 and the forwarding path 2 each are an interface that is of the network device 102 and connected to the network device 103, and an outbound interface corresponding to the forwarding path 3 is an interface that is of the network device 102 and that is connected to the network device 104. That is, the three links correspond to two outbound interfaces. The network device 102 generates, based on the outbound interfaces of the three forwarding paths, two forwarding entries: a forwarding entry 1 and a forwarding entry 2. The forwarding entry 1 includes the destination address of the first IPv6 packet, an outbound interface 1, and a value of the remainder. The outbound interface 1 is an interface connected to the network device 103, and the value of the remainder is 2. The forwarding entry 2 includes the destination address of the first IPv6 packet, an outbound interface 2, and a value of the remainder. The outbound interface 2 is an interface connected to the network device 104, and the value of the remainder is 1. The network device 102 finds the forwarding entry 1 and the forwarding entry 2 based on the destination address of the first IPv6 packet, and determines a sum of the value of the remainder in the forwarding entry 1 and the value of the remainder in the forwarding entry 2 as the quantity of the plurality of links.

In a second implementation, the first network device divides the hash value by a quantity of outbound interfaces corresponding to the plurality of links, and determines the first link based on an obtained remainder. The outbound interface may be a physical outbound interface or a logical outbound interface.

For example, it is assumed that a hash value of the load balancing information S1 included in the IPv6 packet M1 is 100. Because a remainder obtained by dividing 100 by 2 is 0, the network device 102 may use the forwarding path 1 or the forwarding path 2 as the first link, and forward the IPv6 packet M1 through an outbound interface corresponding to the first link, that is, an interface connected to the network device 103. It is assumed that a hash value of the load balancing information S1 included in the IPv6 packet M1 is 101. Because a remainder obtained by dividing 101 by 2 is 1, the network device 102 uses the forwarding path 3 as the first link, and forward the IPv6 packet M1 through an outbound interface corresponding to the first link, that is, an interface connected to the network device 104.

In this implementation, the first network device searches for a forwarding entry based on the destination address of the first IPv6 packet, and determines a quantity of forwarding entries or a quantity of outbound interfaces as a quantity of the plurality of links. For example, the network device 102 finds a forwarding entry 1 and a forwarding entry 2 based on the IPv6 packet M1, and each forwarding entry includes one outbound interface. Therefore, a quantity of links is 2.

Certainly, it may be understood that the foregoing two implementations do not limit the technical solutions of this application, and persons skilled in the art may design a manner depending on actual situation.

For example, the plurality of links between the first network device and the second network device may have equal cost or unequal cost. For the latter, the plurality of links are also referred to as unequal cost multipath (unequal cost multipath) in the industry. This specifically means that the plurality of links between the first network device and the second network device have different weights, where the weights may be determined depending on bandwidths corresponding to the links, that is, a higher bandwidth indicates a larger weight. The first network device may determine the first link based on the weights of the plurality of links, to perform load balancing for different data flows based on bandwidth ratios, to improve link bandwidth utilization.

S103: The first network device sends the first IPv6 packet to the second network device over the first link.

In this embodiment of this application, the first network device may send the first IPv6 packet to the second network device through the outbound interface corresponding to the first link.

Because the first IPv6 packet carries the first load balancing information including the first application characteristic information, the first network device performs hashing on the first load balancing information to determine one of the plurality of links, to implement application-based load balancing. Compared with the conventional load balancing mode on a 5-tuple basis, load balancing is performed at a finer granularity of an application, and therefore the network resource utilization is higher. In addition, because the first application characteristic information is carried in layer 3 network information of the first IPv6 packet, the first network device does not need to move a packet window to obtain the first application characteristic information. This improves packet forwarding efficiency.

Similar to a processing manner of the first IPv6 packet, after obtaining a third IPv6 packet, the first network device may send the third IPv6 packet in a load balancing manner. Specifically, the third IPv6 packet includes third load balancing information. The third load balancing information indicates the first network device to send the third IPv6 packet in a load balancing manner, the third load balancing information includes third application characteristic information, and the third application characteristic information describes a characteristic of a second application associated with the third IPv6 packet. A specific implementation in which the first network device determines, based on the hash algorithm and the third load balancing information, a second link of the plurality of links to the second network device is similar to the foregoing implementation of determining the first link based on the first load balancing information. Details are not described herein again. Subsequently, the first network device sends the third IPv6 packet to the second network device over the second link.

For example, after receiving the IPv6 packet M2 from the terminal device 101, the network device 102 performs hashing based on the load balancing information S2 in the IPv6 packet M2, to obtain a hash value. It is assumed that the hash value of the load balancing information S2 is 102, and because a destination node of the IPv6 packet M2 is the network device 108, and there are three links between the network device 102 and the network device 108, the network device 102 may divide 102 by 3, to obtain a remainder 0, which indicates that the second link is the forwarding path 1. Certainly, the network device 102 may further determine the second link in the foregoing manner of dividing the hash value by the quantity of outbound interfaces of the plurality of links. Details are not described herein again.

The load balancing method provided in embodiments of this application may be applied to various application scenarios. The following describes, with reference to these application scenarios, the method provided in embodiments of this application by using examples.

### Application scenario 1: IPv6 scenario

For example, the network architecture shown in FIG. 1 is applied to the IPv6 scenario. The load balancing method provided in this embodiment of this application may include the following steps.

S201: The network device 102 receives IPv6 packet M1 from the terminal device 101, where the IPv6 packet M1 carries load balancing information S1, and the load balancing information S1 includes an IP address of the terminal device 101, an IP address of the server 109, and application characteristic information P1.

The application characteristic information P1 includes application identifier information, user identifier information, and performance requirement information of an application A, and flow identifier information of a data flow to which the IPv6 packet M1 belongs.

The application characteristic information P1 may be carried in a flow label field of a basic header of the IPv6 packet M1, or carried in a TLV field of an HBH or a DOH of the IPv6 packet M1.

S202: The network device 102 determines, based on a destination address of the IPv6 packet M1, that is, the IP address of the server 109, that there are three links to the server 109.

As mentioned above, there are three forwarding paths between the network device 102 and the server 109: a forwarding path 1, a forwarding path 2, and a forwarding path 3. The three forwarding paths are considered as three links.

S203: The network device 102 performs hashing on the load balancing information S1, and determines, from the three links based on the obtained hash value, a link for forwarding the IPv6 packet M1.

In this embodiment of this application, the link for forwarding the IPv6 packet M1 is, for example, the forwarding path 1. An outbound interface corresponding to the forwarding path is an interface connected to the network device 103.

S204: The network device 102 sends the IPv6 packet M1 to the network device 103 through the outbound interface corresponding to the link for forwarding the IPv6 packet M1.

S205: The network device 103 receives the IPv6 packet M1, and determines, based on the destination address of the IPv6 packet M1, that there are two links to the server 109.

The two links are: the network device 103-the network device 105-the network device 108, and the network device 103-the network device 106-the network device 108.

S206: The network device 103 performs hashing on the load balancing information S1, and determines, from the two links based on the obtained hash value, a link for forwarding the IPv6 packet M1.

In this embodiment of this application, the link for forwarding the IPv6 packet M1 is, for example, the network device 103-the network device 105-the network device 108.

S207: The network device 103 sends the IPv6 packet M1 to the network device 105 through the outbound interface of the link for forwarding the IPv6 packet M1.

S208: The network device 105 sends the IPv6 packet M1 to the network device 108 based on the destination address of the IPv6 packet M1.

S209: The network device 108 sends the IPv6 packet M1 to the server 109 based on the destination address of the IPv6 packet M1.

In this embodiment of this application, the network device 102 and the network device 103 both perform application-based load balancing. This improves resource utilization.

### Application scenario 2: SRv6 scenario

If the network architecture shown in FIG. 1 is applied to the SRv6 scenario, it is assumed that the network device 102 is a head node, and the network device 108 is a tail node. Three forwarding paths between the network device 102 and the network device 108 may satisfy different SR policies (policy). For example, a forwarding path 1 and a forwarding path 2 satisfy a low-latency SR policy, and a forwarding path 3 satisfies a high-reliability SR policy. The network architecture may perform load balancing for data flows that have a same source address, a same destination address, and a same SR policy but associated with different applications.

Correspondingly, the load balancing method provided in this embodiment of this application may include the following steps.

S301: The network device 102 receives IPv6 packet M1 from the terminal device 102, where the IPv6 packet M1 carries load balancing information S1, and the load balancing information S1 includes an IP address of the terminal device 101, an IP address of the server 109, and application characteristic information P1.

The application characteristic information P1 includes application identifier information, user identifier information, and performance requirement information of an application A, and flow identifier information of a data flow to which the IPv6 packet M1 belongs. The performance requirement information of the application A indicates that the application A has a performance requirement of low latency.

The application characteristic information P1 may be carried in a flow label field of a basic header of the IPv6 packet M1, or carried in a TLV field of an HBH or a DOH.

S302: The network device 102 determines, based on a destination address of the IPv6 packet M1, that is, the IP address of the server 109, and the performance requirement information of the application A, that there are two forwarding paths, to the server 109, satisfying the performance requirement of the application A: a forwarding path 1 and a forwarding path 2.

In this embodiment of this application, next-hop network devices on both the forwarding path 1 and the forwarding path 2 are the network device 103. It is assumed that the network device 102 is connected to the network device 103 through a physical interface. In this case, the physical interface may correspond to two logical interfaces: a logical interface 1 and a logical interface 2. The logical interface 1 is an outbound interface of a tunnel 1, and the logical interface 2 is an outbound interface of a tunnel 2. An outbound interface corresponding to the forwarding path 1 may be the logical interface 1, and an outbound interface corresponding to the forwarding path 2 may be the logical interface 2.

S303: The network device 102 performs hashing on the load balancing information S1, and determines, based on a hash value, that the forwarding path 2 is for forwarding the IPv6 packet M1.

S304: The network device 102 encapsulates an SRH and a new basic header at an outer layer of the SRH of the IPv6 packet M1, to obtain an IPv6 packet M1'.

The SRH of the IPv6 packet M1' includes an SID list, and the SID list identifies the forwarding path 2.

The new basic header of the IPv6 packet M1' includes a source address field, a destination address field, and a flow label field (which is referred to as a new flow label field below). The source address field carries an IP address of the network device 102. The destination address field carries an SID of the network device 103 (that is, an IP address of the network device 103). The new flow label field carries the hash value obtained by hashing the load balancing information S1.

S305: The network device 102 sends the IPv6 packet M1' to the network device 103 through the logical interface 2 corresponding to the forwarding path 2.

S306: The network device 103 receives the IPv6 packet M1', and determines, based on the SID list of the SRH, that a next-hop network device is the network device 105.

S307: If there are a plurality of tunnels connected between the network device 103 and the network device 105, the network device 103 performs hashing on load balancing information S1' of the IPv6 packet M1', and selects a tunnel from the plurality of tunnels based on an obtained hash value to forward the IPv6 packet M1' to the network device 105.

The load balancing information S1' of the IPv6 packet M1' includes the IP address of the network device 102, the IP address of the network device 103, and a hash value that is in the new flow label field and obtained by hashing the load balancing information S1.

Before forwarding the IPv6 packet M1' to the network device 105, the network device 103 needs to modify a value of a destination address field in the new basic header of the IPv6 packet M1' to an SID of the network device 105 (that is, an IP address of the network device 105). Therefore, optionally, the network device 103 may perform hash calculation based on a value of a destination address field before modification, and also may perform hash calculation based on a value of a destination address field after modification. To be specific, in the latter case, if the network device 103 performs hash calculation based on the value of the destination address field after modification, the load balancing information S1' on which the network device 103 performs hashing may include the IP address of the network device 102, the IP address of the network device 105, and the hash value that is in the new flow label field and obtained by hashing the load balancing information S1.

S308: The network device 105 receives the IPv6 packet M1', and sends the IPv6 packet M1' to the network device 108 based on the SID list.

S309: The network device 108 sends the IPv6 packet M1' to the server 109.

In this embodiment of this application, the network device 102 and the network device 103 both perform application-based load balancing. This improves resource utilization.

### Application scenario 3: SR MPLS scenario or MPLS scenario

Steps in this scenario are basically similar to those in the application scenario 2, and information encapsulated at an outer layer of the IPv6 packet M1 by the network device 102 is different. In the SR scenario, the network device 102 encapsulates an IPv6 basic header carrying information, obtained by hashing first load balancing information based on the hash algorithm, at an outer layer of an SRH and a new basic header at the outer layer of the IPv6 packet M1. However, in the SR MPLS scenario or the MPLS scenario, the network device 102 may encapsulate a label stack at the outer layer of the IPv6 packet M1. The label stack includes a label list corresponding to a forwarding path 1, and the forwarding path 1 is a forwarding path determined from three forwarding paths to the network device 108 based on a hash value of load balancing information S1 of the IPv6 packet M1. In addition to the label list, the label stack may further include an ELI and an EL. The ELI indicates a location of the EL in the label stack, and the EL includes a hash value obtained by hashing the load balancing information S1 of the IPv6 packet M1. For steps after the network device 103 obtains an IPv6 packet M1' from the network device 102, refer to the foregoing description. Details are not described herein again.

### Application scenario 4: Data center network (data center network, DCN) scenario

FIG. 7 is a schematic diagram of a network architecture of a data center network according to an embodiment of this application. The network architecture includes a spine (spine) node, a leaf (leaf) node, and a top of rack (top of rack, TOR) node. The spine node includes a node 31 and a node 32. The leaf node includes a node 11, a node 12, a node 21, and a node 22. The TOR node includes a node 1, a node 2, a node 3, and a node 4. Connection relationships between nodes are shown in FIG. 5. Details are not described herein. The spine nodes, the leaf nodes, and the TOR nodes may all be layer 3 switches. The node 1 is connected to a terminal device 1, and the node 3 is connected to a terminal device 2. Eight APPs, namely, APP1 to APP8 are installed on both the terminal device 1 and the terminal device 2.

In this embodiment of this application, SR MPLS may be deployed on each node in the DCN architecture. Each node may advertise an advertisement message to another node based on an External Border Gateway Protocol (external border gateway protocol, EBGP), where the advertisement message includes a prefix label of the node.

For example, the node 3 advertises an advertisement message carrying a prefix label of the node 3. After receiving the advertisement message, the node 21 and the node 22 both generate a forwarding entry. The forwarding entry includes the prefix label of the node 3 and an outbound interface, and the outbound interface is an interface connected to the node 3. The node 31 receives the advertisement message carrying the prefix label of the node 3 from the node 21 and the advertisement message carrying the prefix label of the node 3 from the node 22, and separately generates forwarding entries based on the advertisement messages. In addition to the prefix label of the node 3, the forwarding entry further includes outbound interfaces separately connected to the node 21 and the node 22. Similarly, the node 32 also generates a forwarding entry including the prefix label of the node 3 and outbound interfaces connected to the node 21 and the node 22. Similarly, both the node 11 and the node 12 generate forwarding entries including the prefix label of the node 3 and outbound interfaces connected to the node 31 and the node 32.

It is assumed that data flows of eight applications need to be transmitted between the node 1 and the node 3, and there are eight equal-cost paths in total between the node 1 and the node 3. In this case, the data flows of the eight applications may be load balanced through the eight equal-cost paths by using the load balancing method provided in this embodiment of this application, to improve network resource utilization.

The following describes a comparative load balancing method by using the application 1 in the eight applications as an example.

S401: The node 1 receives an IPv6 packet M2 carrying load balancing information S2, where the load balancing information S2 includes an IP address of the terminal device 1, an IP address of the terminal device 2, and application characteristic information P2.

The application characteristic information P2 includes application identifier information, user identifier information, and performance requirement information of the application 1, and flow identifier information of a data flow to which the IPv6 packet M2 belongs.

S402: The node 1 performs hashing on the load balancing information S2, to obtain a hash value 100.

S403: The node 1 searches for forwarding entries based on the prefix label of the node 3, and obtains two forwarding entries whose next hops are the node 11 and the node 12. The node 1 divides 100 by 2 to obtain a remainder 0, and the node 1 sends the IPv6 packet M2 to the node 11 corresponding to the remainder 0.

S404: The node 11 receives the IPv6 packet M2, and performs hashing on the load balancing information S2, to obtain a hash value 100.

S405: The node 11 searches for forwarding entries based on the prefix label of the node 3, and obtains two forwarding entries whose next hops are the node 31 and the node 32. The node 1 divides 100 by 2 to obtain a remainder 0, and the node 1 sends the IPv6 packet M2 to the node 31 corresponding to the remainder 0.

S406: The node 31 receives the IPv6 packet M2, and performs hashing on the load balancing information S2, to obtain a hash value 100.

S407: The node 31 searches for forwarding entries based on the prefix label of the node 3, and obtains two forwarding entries whose next hops are the node 21 and the node 22. The node 1 divides 100 by 2 to obtain a remainder 0, and the node 1 sends the IPv6 packet M2 to the node 21 corresponding to the remainder 0.

S408: The node 21 receives the IPv6 packet M2, searches for a forwarding entry based on the prefix label of the node 3, and sends the IPv6 packet M2 to the node 3 based on an outbound interface corresponding to the node 3 in the forwarding entry.

In this embodiment of this application, the node 1, the node 11, and the node 31 all perform application-based load balancing. This improves resource utilization.

Referring to FIG. 8, an embodiment of this application further provides a load balancing apparatus 800. The load balancing apparatus 800 may implement functions of the first network device in the embodiment shown in FIG. 2. The load balancing apparatus 800 includes a first obtaining unit 801, a first determining unit 802, and a first sending unit 803. The first obtaining unit 801 is configured to implement S101 in the embodiment shown in FIG. 2. The first determining unit 802 is configured to implement S102 in the embodiment shown in FIG. 2. The first sending unit 803 is configured to implement S103 in the embodiment shown in FIG. 2.

Specifically, the first obtaining unit 801 is configured to obtain a first Internet Protocol version 6 IPv6 packet. The first IPv6 packet includes first load balancing information, and the first load balancing information indicates the first network device to send the first IPv6 packet in a load balancing manner. The first load balancing information includes first application characteristic information, and the first application characteristic information describes a characteristic of a first application associated with the first IPv6 packet.

The first determining unit 802 is configured to determine a first link based on a hash algorithm and the first load balancing information, where the first network device communicates with a second network device over a plurality of links, and the plurality of links include the first link.

The first sending unit 803 is configured to send the first IPv6 packet to the second network device over the first link.

For a specific execution process, refer to the detailed descriptions of corresponding steps in the foregoing embodiment shown in FIG. 2. Details are not described herein again.

It should be noted that, in embodiments of this application, division into the units is an example, and is only a logical function division. In actual implementation, another division manner may be used. Functional units in embodiments of this application may be integrated into one processing unit, or each of the units may exist alone physically, or two or more units are integrated into one unit. For example, in the foregoing embodiment, the obtaining unit and the processing unit may be a same unit or different units. The integrated unit may be implemented in a form of hardware, or may be implemented in a form of a software functional unit.

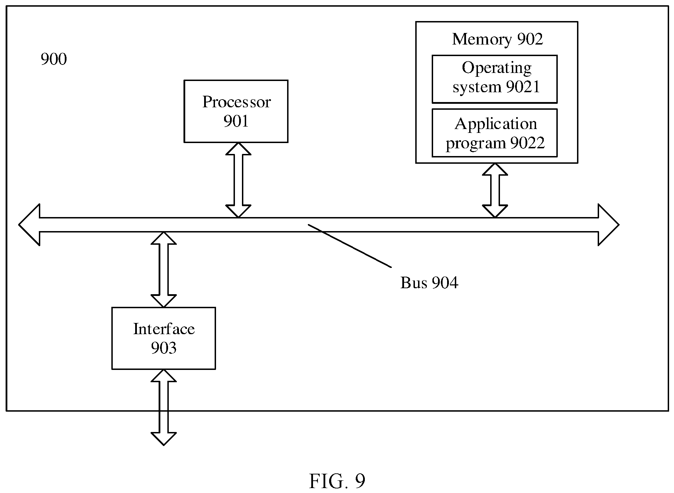

FIG. 9 is a schematic diagram of a hardware structure of a first network device 900 according to an embodiment of this application. The first network device 900 shown in FIG. 9 may perform corresponding steps performed by the first network device in the method in the foregoing embodiments.

As shown in FIG. 9, the second network device 900 includes a processor 901, a memory 902, an interface 903, and a bus 904. The interface 903 may be implemented in a wireless or wired manner, and may be specifically a network adapter. The processor 901, the memory 902, and the interface 903 are connected through the bus 904.

The interface 903 may specifically include a transmitter and a receiver, and is configured to send and receive information between a second network device and the first network device in the foregoing embodiments. For example, the interface 903 is configured to support sending of a first IPv6 packet to the second network device. For example, the interface 903 is configured to support S103 in the embodiment shown in FIG. 2. The processor 901 is configured to perform processing performed by the first network device in the foregoing embodiments. For example, the processor 901 is configured to obtain the first IPv6 packet, and determine a first link based on a hash algorithm and first load balancing information; and/or is configured to perform another process of the technology described in this specification. For example, the processor 901 is configured to support S101 and S102 in the embodiment shown in FIG. 2. The memory 902 includes an operating system 9021 and an application program 9022, and is configured to store a program, code, or instructions. When the processor or a hardware device executes the program, the code, or the instructions, a processing process related to the first network device in the method embodiments may be implemented. Optionally, the memory 902 may include a read-only memory (Read-only Memory, ROM) and a random access memory (Random Access Memory, RAM). The ROM includes a basic input/output system (Basic Input/Output System, BIOS) or an embedded system. The RAM includes an application program and an operating system. When the first network device 900 needs to be run, the BIOS built into the ROM or bootloader in the embedded system is used to boot a system to start, to boot the first network device 900 to enter a normal running state. After entering the normal running state, the first network device 900 runs the application program and the operating system in the RAM, to implement the processing processes related to the first network device in the method embodiments.

It may be understood that FIG. 9 shows only a simplified design of the first network device 900. The first network device may include any quantity of interfaces, processors, or memories in actual application.

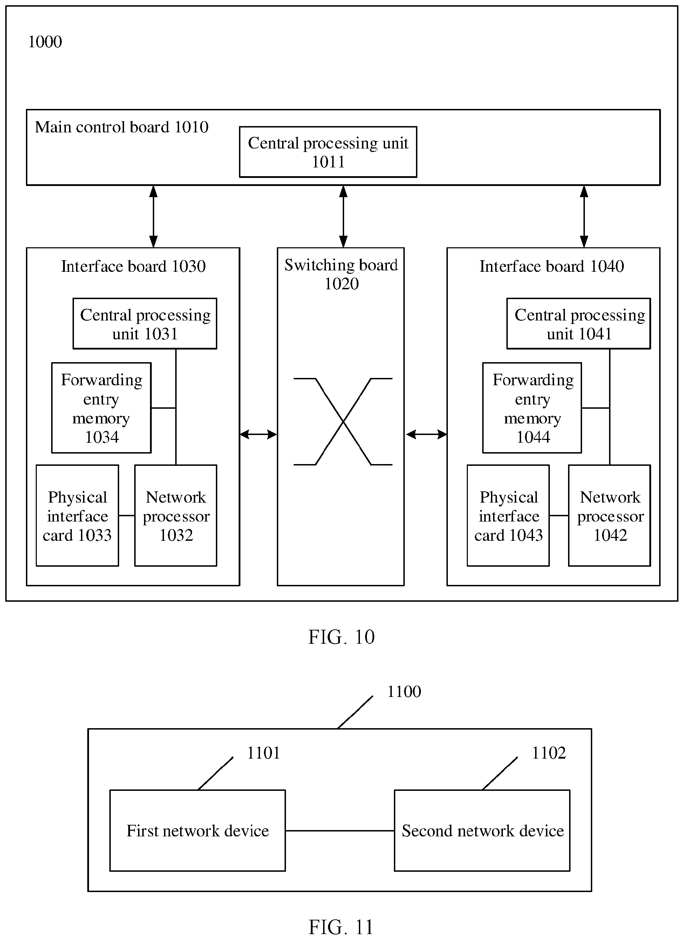

FIG. 10 is a schematic diagram of a hardware structure of another first network device 1000 according to an embodiment of this application. The first network device 1000 shown in FIG. 10 may perform corresponding steps performed by the first network device in the method in the foregoing embodiments.

As shown in FIG. 10, the first network device 1000 includes a main control board 1010, an interface board 1030, a switching board 1020, and an interface board 1040. The main control board 1010, the interface board 1030 and the interface board 1040, and the switching board 1020 are connected to a system backboard through a system bus for interworking. The main control board 1010 is configured to implement functions such as system management, device maintenance, and protocol processing. The switching board 1020 is configured to implement data exchange between interface boards (also referred to as line cards or service boards). The interface boards 1030 and 1040 provide various service interfaces (such as a POS interface, a GE interface, and an ATM interface), and forward data packets.

The interface board 1030 may include a central processing unit 1031, a forwarding entry memory 1034, a physical interface card 1033, and a network processor 1032. The central processing unit 1031 is configured to control and manage the interface board, and communicate with a central processing unit on the main control board. The forwarding entry memory 1034 is configured to store a forwarding entry. The physical interface card 1033 is configured to receive and send traffic. The network memory 1032 is configured to control, based on the forwarding entry, the physical interface card 1033 to receive and send the traffic.

Specifically, a central processing unit 1011 is configured to obtain a first IPv6 packet, and determine a first link based on a hash algorithm and first load balancing information.

The central processing unit 1011 sends the first IPv6 packet to the physical interface card 1033 via the central processing unit 1031. The physical interface card 1033 sends the first IPv6 packet.

The central processing unit 1031 is further configured to control the network memory 1032 to obtain the forwarding entry in the forwarding entry memory 1034. The central processing unit 1031 is further configured to control the network memory 1032 to receive and send the traffic via the physical interface card 1033.

It should be understood that operations on the interface board 1040 are the same as operations on the interface board 1030 in this embodiment of the present invention. For brevity, details are not described again. It should be understood that the first network device 1000 in this embodiment may correspond to the functions and/or the various implemented steps in the foregoing method embodiments. Details are not described herein.

In addition, it should be noted that there may be one or more main control boards. When there are a plurality of main control boards, the main control boards may include an active main control board and a standby main control board. There may be one or more interface boards. A first network device having a stronger data processing capability provides more interface boards. There may also be one or more physical interface cards on the interface board. There may be no switching board, or there may be one or more switching boards. Mutual load balancing and redundancy backup are implemented in the case of a plurality of switching boards. In a centralized forwarding architecture, the first network device may not include a switching board, and the interface board undertakes a service data processing function of an entire system. In a distributed forwarding architecture, the first network device may include at least one switching board, to implement data exchange between a plurality of interface boards, and provide large-capacity data exchange and processing capabilities. Therefore, the data access and processing capabilities of the distributed architecture-based first network device are stronger than those of the centralized architecture-based device. A specific architecture to be used depends on a specific networking deployment scenario. This is not limited herein.

Referring to FIG. 11, an embodiment of this application further provides a load balancing system 1100. The system 1100 is configured to implement the load balancing method in the embodiment shown in FIG. 2. Specifically, the load balancing system includes a first network device 1101 and a second network device 1102. The first network device 1101 is configured to implement functions of the first network device in the embodiment shown in FIG. 2 or functions of the load balancing apparatus 800 in the embodiment shown in FIG. 8. The second network device 1102 is configured to implement functions of the second network device in the embodiment shown in FIG. 2. For a specific execution process, refer to the detailed descriptions of corresponding steps in the foregoing embodiment shown in FIG. 4 or FIG. 10. Details are not described herein again.

Embodiments of this application further provide a chip system, including a processor. The processor is coupled to a memory, and the memory is configured to store a program or instructions. When the program or the instructions are executed by the processor, the chip system is enabled to implement the method performed by the first network device in the embodiment shown FIG. 2.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separate from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processor (digital signal processor, DSP), a micro controller unit (micro controller unit, MCU), a programmable logic device (programmable logic device, PLD), or another integrated chip.

It should be understood that steps in the foregoing method embodiments may be implemented by using a hardware integrated logic circuit or instructions in a software form in the processor. The steps of the methods disclosed with reference to embodiments of this application may be directly performed by a hardware processor, or may be performed by a combination of hardware in the processor and a software module.

Embodiments of this application further provide a computer-readable storage medium, including instructions. When the instructions are run on a computer, the computer is enabled to perform the load balancing method in the foregoing embodiments.

In the specification, claims, and accompanying drawings of this application, the terms "first", "second", "third", "fourth", and the like are intended to distinguish similar objects but do not need to be used to describe a specific order or sequence. It should be understood that data used in such a way is interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this application, "at least one item (piece)" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In this application, it is considered that "A and/or B" includes only A, only B, and A and B.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, unit division is merely logical module division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, to be specific, may be located in one position, or may be distributed on a plurality of network units. Some or all of the units may be obtained according to actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

## Claims

1. A load balancing method, wherein the method comprises:
obtaining (S101), by a first network device, a first Internet Protocol IP packet, wherein the first IP packet comprises first load balancing information, the first load balancing information indicates the first network device to send the first IP packet in a load balancing manner, the first load balancing information comprises first application characteristic information, and the first application characteristic information describes a characteristic of a first application associated with the first IP packet;
determining (S102), by the first network device, a first link based on a hash algorithm and the first load balancing information, wherein the first network device communicates with a second network device over a plurality of links, and the plurality of links comprise the first link; and
sending (S103), by the first network device, the first IP packet to the second network device over the first link,
wherein the first network device and the second network device are forwarding devices configured to transmit data flows between terminal devices and a server, to implement load balancing;
**characterized in that**
the first application characteristic information comprises application identifier information of the first application, and the application identifier information of the first application identifies the first application, wherein the first IP packet is a first IP version 6 IPv6 packet comprising a segment routing header SRH, and the sending, by the first network device, the first IPv6 packet to the second network device over the first link comprises:
encapsulating, by the first network device, an IPv6 basic header at an outer layer of the SRH of the first IPv6 packet to obtain a second IPv6 packet, wherein the IPv6 basic header carries second application characteristic information, and the second application characteristic information is information obtained by hashing the first load balancing information based on the hash algorithm; and
sending, by the first network device, the second IPv6 packet to the second network device over the first link.

2. The method according to claim 1, wherein the first application characteristic information further comprises at least one of the following information:
performance requirement information of the first application, flow identifier information of a data flow to which the first IPv6 packet belongs, and user identifier information of the first application.

3. The method claim 1 or 2, wherein the first load balancing information further comprises at least one of the following information:
a source address of the first IPv6 packet and a destination address of the first IPv6 packet.

4. The method according to any one of claims 1 to 3, wherein the method further comprises:
obtaining, by the first network device, a third IPv6 packet, wherein the third IPv6 packet comprises third load balancing information, the third load balancing information indicates the first network device to send the third IPv6 packet in a load balancing manner, the third load balancing information comprises third application characteristic information, and the third application characteristic information describes a characteristic of a second application associated with the third IPv6 packet;
determining, by the first network device, a second link based on the hash algorithm and the third load balancing information, wherein the plurality of links comprise the second link; and
sending, by the first network device, the third IPv6 packet to the second network device over the second link.

5. A load balancing apparatus (800), wherein the apparatus is a first network device and comprises:
a first obtaining unit (801), configured to obtain a first Internet Protocol IP packet, wherein the first IP packet comprises first load balancing information, the first load balancing information indicates the first network device to send the first IP packet in a load balancing manner, the first load balancing information comprises first application characteristic information, and the first application characteristic information describes a characteristic of a first application associated with the first IP packet;
a first determining unit (802), configured to determine a first link based on a hash algorithm and the first load balancing information, wherein the first network device communicates with a second network device over a plurality of links, and the plurality of links comprise the first link; and
a first sending unit (803), configured to send the first IP packet to the second network device over the first link;
wherein the first network device and the second network device are forwarding devices configured to transmit data flows between terminal devices and a server, to implement load balancing; **characterized in that**
the first application characteristic information comprises application identifier information of the first application, and the application identifier information of the first application identifies the first application;
wherein the first IP packet is a first IP version 6 IPv6 packet comprising a segment routing header SRH, and the first sending unit (803) is configured to:
encapsulate an IPv6 basic header at an outer layer of the SRH of the first IPv6 packet to obtain a second IPv6 packet, wherein the IPv6 basic header carries second application characteristic information, and the second application characteristic information is information obtained by hashing the first load balancing information based on the hash algorithm; and
send the second IPv6 packet to the second network device over the first link.

6. The apparatus according to claim 5, wherein the first application characteristic information further comprises at least one of the following information:
performance requirement information of the first application, flow identifier information of a data flow to which the first IPv6 packet belongs, and user identifier information of the first application.

7. The apparatus according to claim 5 or 6, wherein the first load balancing information further comprises at least one of the following information:
a source address of the first IPv6 packet and a destination address of the first IPv6 packet.

8. A computer-readable storage medium, comprising instructions, a program, or code, wherein when the instructions, the program, or the code are/is executed on a computer, the computer is enabled to perform the load balancing method according to any one of claims 1 to 4.

9. A chip (900), comprising a computer-readable storage medium according to claim 8 and a processor (901), wherein the computer-readable storage medium is a memory(902), and the processor (901) is configured to invoke the instructions or the code from the memory (902) and run the instructions or the code.

10. A system (1100) comprising a first network device (1101) and a second network device (1102),
wherein the first network device (1101) and the second network device (1102) are forwarding devices configured to transmit data flows between terminal devices (101, 110) and a server (109), to implement load balancing,
wherein the first network device is a load balancing apparatus (800) according to any of claims 5-7, and wherein the second network device is configured to receive the first Internet Protocol IP version 6 IPv6 packet and the second IPv6 packet over the first link.

11. The system of claim 10, further comprising the server (109).

## Patentansprüche

1. Lastausgleichsverfahren, wobei das Verfahren Folgendes umfasst:
Erhalten (S101), durch ein erstes Netzwerkgerät, eines ersten Internetprotokoll- bzw. IP-Pakets, wobei das erste IP-Paket erste Lastausgleichsinformationen umfasst, wobei die ersten Lastausgleichsinformationen dem ersten Netzwerkgerät anzeigen, das erste IP-Paket in einer Lastausgleichsweise zu senden, wobei die ersten Lastausgleichsinformationen erste Anwendungseigenschaftsinformationen umfassen und die ersten Anwendungseigenschaftsinformationen eine Eigenschaft einer mit dem ersten IP-Paket assoziierten ersten Anwendung beschreiben;
Bestimmen (S102), durch das erste Netzwerkgerät, einer ersten Verbindung basierend auf einem Hash-Algorithmus und den ersten Lastausgleichsinformationen, wobei das erste Netzwerkgerät mit einem zweiten Netzwerkgerät über eine Mehrzahl von Verbindungen kommuniziert und die Mehrzahl von Verbindungen die erste Verbindung umfasst; und
Senden (S103), durch das erste Netzwerkgerät, des ersten IP-Pakets an das zweite Netzwerkgerät über die erste Verbindung,
wobei das erste Netzwerkgerät und das zweite Netzwerkgerät weiterleitende Geräte sind, die dazu konfiguriert sind, Datenflüsse zwischen Endgeräten und einem Server zu übertragen, um einen Lastausgleich zu implementieren;
**dadurch gekennzeichnet, dass**
die ersten Anwendungseigenschaftsinformationen Anwendungskennungsinformationen der ersten Anwendung umfassen und die Anwendungskennungsinformationen der ersten Anwendung die erste Anwendung kennzeichnen, wobei das erste IP-Paket ein erstes IP-Version 6- bzw. IPv6-Paket ist, das eine Segmentroutingkopfzeile SRH umfasst, und wobei das Senden, durch das erste Netzwerkgerät, des ersten IPv6-Pakets an das zweite Netzwerkgerät über die erste Verbindung Folgendes umfasst:
Verkapseln, durch das erste Netzwerkgerät, einer IPv6-Basiskopfzeile an einer äußeren Schicht der SRH des ersten IPv6-Pakets, um ein zweites IPv6-Paket zu erhalten, wobei die IPv6-Basiskopfzeile zweite Anwendungseigenschaftsinformationen führt und die zweiten Anwendungseigenschaftsinformationen Informationen sind, die durch "Hashing" der ersten Lastausgleichsinformationen basierend auf dem Hash-Algorithmus erhalten werden; und
Senden, durch das erste Netzwerkgerät, des zweiten IPv6-Pakets an das zweite Netzwerkgerät über die erste Verbindung.

2. Verfahren nach Anspruch 1, wobei die ersten Anwendungseigenschaftsinformationen ferner mindestens eine der folgenden Informationen umfassen:
Leistungsanforderungsinformationen der ersten Anwendung, Flusskennungsinformationen eines Datenflusses, zu dem das erste IPv6-Paket gehört, und Benutzerkennungsinformationen der ersten Anwendung.

3. Verfahren nach Anspruch 1 oder 2, wobei die ersten Lastausgleichsinformationen ferner mindestens eine der folgenden Informationen umfassen:
eine Quelladresse des ersten IPv6-Pakets und eine Zieladresse des ersten IPv6-Pakets.

4. Verfahren nach einem der Ansprüche 1 bis 3, wobei das Verfahren ferner Folgendes umfasst:
Erhalten, durch das erste Netzwerkgerät, eines dritten IPv6-Pakets, wobei das dritte IPv6-Paket dritte Lastausgleichsinformationen umfasst, wobei die dritten Lastausgleichsinformationen dem ersten Netzwerkgerät anzeigen, das dritte IPv6-Paket in einer Lastausgleichsweise zu senden, wobei die dritten Lastausgleichsinformationen dritte Anwendungseigenschaftsinformationen umfassen und die dritten Anwendungseigenschaftsinformationen eine Eigenschaft einer mit dem dritten IPv6-Paket assoziierten zweiten Anwendung beschreiben;
Bestimmen, durch das erste Netzwerkgerät, einer zweiten Verbindung basierend auf dem Hash-Algorithmus und den dritten Lastausgleichsinformationen, wobei die Mehrzahl von Verbindungen die zweite Verbindung umfasst; und
Senden, durch das erste Netzwerkgerät, des dritten IPv6-Pakets an das zweite Netzwerkgerät über die zweite Verbindung.

5. Lastausgleichsvorrichtung (800), wobei die Vorrichtung ein erstes Netzwerkgerät ist und Folgendes umfasst:
eine erste Erhaltungseinheit (801), die dazu konfiguriert ist, ein erstes Internetprotokoll- bzw. IP-Paket zu erhalten, wobei das erste IP-Paket erste Lastausgleichsinformationen umfasst, wobei die ersten Lastausgleichsinformationen dem ersten Netzwerkgerät anzeigen, das erste IP-Paket in einer Lastausgleichsweise zu senden, wobei die ersten Lastausgleichsinformationen erste Anwendungseigenschaftsinformationen umfassen und die ersten Anwendungseigenschaftsinformationen eine Eigenschaft einer mit dem ersten IP-Paket assoziierten ersten Anwendung beschreiben;
eine erste Bestimmungseinheit (802), die dazu konfiguriert ist, eine erste Verbindung basierend auf einem Hash-Algorithmus und den ersten Lastausgleichsinformationen zu bestimmen, wobei das erste Netzwerkgerät mit einem zweiten Netzwerkgerät über eine Mehrzahl von Verbindungen kommuniziert und die Mehrzahl von Verbindungen die erste Verbindung umfasst; und
eine erste Sendeeinheit (803), die dazu konfiguriert ist, das erste IP-Paket an das zweite Netzwerkgerät über die erste Verbindung zu senden;
wobei das erste Netzwerkgerät und das zweite Netzwerkgerät weiterleitende Geräte sind, die dazu konfiguriert sind, Datenflüsse zwischen Endgeräten und einem Server zu übertragen, um einen Lastausgleich zu implementieren; **dadurch gekennzeichnet, dass**
die ersten Anwendungseigenschaftsinformationen Anwendungskennungsinformationen der ersten Anwendung umfassen und die Anwendungskennungsinformationen der ersten Anwendung die erste Anwendung kennzeichnen;
wobei das erste IP-Paket ein erstes IP-Version 6- bzw. IPv6-Paket ist, das eine Segmentroutingkopfzeile SRH umfasst, und die erste Sendeeinheit (803) zu Folgendem konfiguriert ist:
Verkapseln einer IPv6-Basiskopfzeile an einer äußeren Schicht der SRH des ersten IPv6-Pakets, um ein zweites IPv6-Paket zu erhalten, wobei die IPv6-Basiskopfzeile zweite Anwendungseigenschaftsinformationen führt und die zweiten Anwendungseigenschaftsinformationen Informationen sind, die durch "Hashing" der ersten Lastausgleichsinformationen basierend auf dem Hash-Algorithmus erhalten werden; und
Senden des zweiten IPv6-Pakets an das zweite Netzwerkgerät über die erste Verbindung.

6. Vorrichtung nach Anspruch 5, wobei die ersten Anwendungseigenschaftsinformationen ferner mindestens eine der folgenden Informationen umfassen:
Leistungsanforderungsinformationen der ersten Anwendung, Flusskennungsinformationen eines Datenflusses, zu dem das erste IPv6-Paket gehört, und Benutzerkennungsinformationen der ersten Anwendung.

7. Vorrichtung nach Anspruch 5 oder 6, wobei die ersten Lastausgleichsinformationen ferner mindestens eine der folgenden Informationen umfassen:
eine Quelladresse des ersten IPv6-Pakets und eine Zieladresse des ersten IPv6-Pakets.

8. Computerlesbares Speicherungsmedium, das Anweisungen, ein Programm oder Code umfasst, wobei, wenn die Anweisungen, das Programm oder der Code auf einem Computer ausgeführt werden/wird, dem Computer ermöglicht wird, das Lastausgleichsverfahren nach einem der Ansprüche 1 bis 4 durchzuführen.

9. Chip (900), umfassend ein computerlesbares Speicherungsmedium nach Anspruch 8 und einen Prozessor (901), wobei das computerlesbare Speicherungsmedium ein Speicher (902) ist und der Prozessor (901) dazu konfiguriert ist, die Anweisungen oder den Code aus dem Speicher (902) abzurufen und die Anweisungen oder den Code auszuführen.

10. System (1100), umfassend ein erstes Netzwerkgerät (1101) und ein zweites Netzwerkgerät (1102),
wobei das erste Netzwerkgerät (1101) und das zweite Netzwerkgerät (1102) weiterleitende Geräte sind, die dazu konfiguriert sind, Datenflüsse zwischen Endgeräten (101, 110) und einem Server (109) zu übertragen, um einen Lastausgleich zu implementieren,
wobei das erste Netzwerkgerät eine Lastausgleichsvorrichtung (800) nach einem der Ansprüche 5-7 ist, und
wobei das zweite Netzwerkgerät dazu konfiguriert ist, das erste Internetprotokoll(IP)-Version 6- bzw. IPv6-Paket und das zweite IPv6-Paket über die erste Verbindung zu empfangen.

11. System nach Anspruch 10, ferner umfassend den Server (109).

## Revendications

1. Procédé d'équilibrage de charge, dans lequel le procédé comprend :
l'obtention (S101), par un premier dispositif de réseau, d'un premier paquet de protocole Internet, IP, dans lequel le premier paquet IP comprend des premières informations d'équilibrage de charge, les premières informations d'équilibrage de charge indiquent au premier dispositif de réseau d'envoyer le premier paquet IP de manière à équilibrer la charge, les premières informations d'équilibrage de charge comprennent des premières informations de caractéristique d'application, et les premières informations de caractéristique d'application décrivent une caractéristique d'une première application associée au premier paquet IP ;
la détermination (S102), par le premier dispositif de réseau, d'une première liaison sur la base d'un algorithme de hachage et des premières informations d'équilibrage de charge, dans lequel le premier dispositif de réseau communique avec un second dispositif de réseau sur une pluralité de liaisons, et la pluralité de liaisons comprend la première liaison ; et
l'envoi (S103), par le premier dispositif de réseau, du premier paquet IP au second dispositif de réseau sur la première liaison,
dans lequel le premier dispositif de réseau et le second dispositif de réseau sont des dispositifs de transfert configurés pour transmettre des flux de données entre des dispositifs terminaux et un serveur, pour mettre en œuvre un équilibrage de charge ;
**caractérisé en ce que**
les premières informations de caractéristique d'application comprennent des informations d'identifiant d'application de la première application, et les informations d'identifiant d'application de la première application identifient la première application, dans lequel le premier paquet IP est un premier paquet IP version 6 IPv6 comprenant un en-tête d'acheminement de segment SRH, et l'envoi, par le premier dispositif de réseau, du premier paquet IPv6 au second dispositif de réseau sur la première liaison comprend :
l'encapsulation, par le premier dispositif de réseau, d'un en-tête de base IPv6 au niveau d'une couche externe du SRH du premier paquet IPv6 pour obtenir un deuxième paquet IPv6, dans lequel l'en-tête de base IPv6 transporte des deuxièmes informations de caractéristique d'application, et les deuxièmes informations de caractéristique d'application sont des informations obtenues par hachage des premières informations d'équilibrage de charge sur la base de l'algorithme de hachage ; et
l'envoi, par le premier dispositif de réseau, du deuxième paquet IPv6 au second dispositif de réseau sur la première liaison.

2. Procédé selon la revendication 1, dans lequel les premières informations de caractéristique d'application comprennent en outre au moins l'une des informations suivantes :
des informations d'exigence de performance de la première application, des informations d'identifiant de flux d'un flux de données auquel appartient le premier paquet IPv6, et des informations d'identifiant d'utilisateur de la première application.

3. Procédé selon la revendication 1 ou 2, dans lequel les premières informations d'équilibrage de charge comprennent en outre au moins l'une des informations suivantes :
une adresse source du premier paquet IPv6 et une adresse de destination du premier paquet IPv6.

4. Procédé selon l'une quelconque des revendications 1 à 3, dans lequel le procédé comprend en outre :
l'obtention, par le premier dispositif de réseau, d'un troisième paquet IPv6, dans lequel le troisième paquet IPv6 comprend des troisièmes informations d'équilibrage de charge, les troisièmes informations d'équilibrage de charge indiquent au premier dispositif de réseau d'envoyer le troisième paquet IPv6 de manière à équilibrer la charge, les troisièmes informations d'équilibrage de charge comprennent des troisièmes informations de caractéristique d'application, et les troisièmes informations de caractéristique d'application décrivent une caractéristique d'une seconde application associée au troisième paquet IPv6 ;
la détermination, par le premier dispositif de réseau, d'une seconde liaison sur la base de l'algorithme de hachage et des troisièmes informations d'équilibrage de charge, dans lequel la pluralité de liaisons comprend la seconde liaison ; et
l'envoi, par le premier dispositif de réseau, du troisième paquet IPv6 au second dispositif de réseau sur la seconde liaison.

5. Appareil d'équilibrage de charge (800), dans lequel l'appareil est un premier dispositif de réseau et comprend :
une première unité d'obtention (801), configurée pour obtenir un premier paquet de protocole Internet, IP, dans lequel le premier paquet IP comprend des premières informations d'équilibrage de charge, les premières informations d'équilibrage de charge indiquent au premier dispositif de réseau d'envoyer le premier paquet IP de manière à équilibrer la charge, les premières informations d'équilibrage de charge comprennent des premières informations de caractéristique d'application, et les premières informations de caractéristique d'application décrivent une caractéristique d'une première application associée au premier paquet IP ;
une première unité de détermination (802), configurée pour déterminer une première liaison sur la base d'un algorithme de hachage et des premières informations d'équilibrage de charge, dans lequel le premier dispositif de réseau communique avec un second dispositif de réseau sur une pluralité de liaisons, et la pluralité de liaisons comprend la première liaison ; et
une première unité d'envoi (803), configurée pour envoyer le premier paquet IP au second dispositif de réseau sur la première liaison,
dans lequel le premier dispositif de réseau et le second dispositif de réseau sont des dispositifs de transfert configurés pour transmettre des flux de données entre des dispositifs terminaux et un serveur, pour mettre en œuvre un équilibrage de charge ;
**caractérisé en ce que**
les premières informations de caractéristique d'application comprennent des informations d'identifiant d'application de la première application, et les informations d'identifiant d'application de la première application identifient la première application ;
dans lequel le premier paquet IP est un premier paquet IP version 6 IPv6 comprenant un en-tête d'acheminement de segment SRH, et la première unité d'envoi (803) est configurée pour :
encapsuler un en-tête de base IPv6 au niveau d'une couche externe du SRH du premier paquet IPv6 pour obtenir un deuxième paquet IPv6, dans lequel l'en-tête de base IPv6 transporte des deuxièmes informations de caractéristique d'application, et les deuxièmes informations de caractéristique d'application sont des informations obtenues par hachage des premières informations d'équilibrage de charge sur la base de l'algorithme de hachage ; et
envoyer le deuxième paquet IPv6 au second dispositif de réseau sur la première liaison.

6. Appareil selon la revendication 5, dans lequel les premières informations de caractéristique d'application comprennent en outre au moins l'une des informations suivantes :
des informations d'exigence de performance de la première application, des informations d'identifiant de flux d'un flux de données auquel appartient le premier paquet IPv6, et des informations d'identifiant d'utilisateur de la première application.

7. Appareil selon la revendication 5 ou 6, dans lequel les premières informations d'équilibrage de charge comprennent en outre au moins l'une des informations suivantes :
une adresse source du premier paquet IPv6 et une adresse de destination du premier paquet IPv6.

8. Support de stockage lisible par ordinateur, comprenant des instructions, un programme ou du code, dans lequel lorsque les instructions, le programme ou le code sont exécutés sur un ordinateur, l'ordinateur est activé pour exécuter le procédé d'équilibrage de charge selon l'une quelconque des revendications 1 à 4.

9. Puce (900), comprenant un support de stockage lisible par ordinateur selon la revendication 8 et un processeur (901), dans lequel le support de stockage lisible par ordinateur est une mémoire (902), et le processeur (901) est configuré pour appeler les instructions ou le code dans la mémoire (902) et exécuter les instructions ou le code.

10. Système (1100) comprenant un premier dispositif de réseau (1101) et un second dispositif de réseau (1102), dans lequel le premier dispositif de réseau (1101) et le second dispositif de réseau (1102) sont des dispositifs de transfert configurés pour transmettre des flux de données entre des dispositifs terminaux (101, 110) et un serveur (109), pour mettre en œuvre un équilibrage de charge,
dans lequel le premier dispositif de réseau est un appareil d'équilibrage de charge (800) selon l'une quelconque des revendications 5 à 7, et
dans lequel le second dispositif de réseau est configuré pour recevoir le premier paquet de protocole internet, IP, version 6 IPv6 et le deuxième paquet IPv6 sur la première liaison.

11. Système selon la revendication 10, comprenant en outre le serveur (109).
